(19) Europäisches Patentamt

European Patent Office

Office européen des brevets

(11) **EP 1 796 042 B1**

(12) **EUROPEAN PATENT SPECIFICATION**

(45) Date of publication and mention
of the grant of the patent:
**23.02.2011 Bulletin 2011/08**

(51) Int Cl.:
*G06T 7/20* (2006.01)　　*G06T 7/00* (2006.01)

(21) Application number: **06125309.2**

(22) Date of filing: **04.12.2006**

(54) **Detection apparatus and method**

Detektionsvorrichtung und -verfahren

Appareil et procédé de détection

(84) Designated Contracting States:
**DE FR GB**

(30) Priority: **06.12.2005　JP 2005351783**

(43) Date of publication of application:
**13.06.2007　Bulletin 2007/24**

(73) Proprietor: **NISSAN MOTOR CO., LTD.**
**Yokohama-shi,**
**Kanagawa 221-0023 (JP)**

(72) Inventor: **Fujimoto, Kazumi**
**Kanagawa 243-0192 (JP)**

(74) Representative: **Brochard, Pascale et al**
**Osha Liang**
**32 avenue de l'Opéra**
**75002 Paris (FR)**

(56) References cited:
**EP-A- 1 227 438**　　**EP-A- 1 705 917**
**EP-A- 1 817 761**

• **DANIEL J DAILEY ET AL: "An Algorithm to Estimate Mean Traffic Speed Using Uncalibrated Cameras" IEEE TRANSACTIONS ON INTELLIGENT TRANSPORTATION SYSTEMS, IEEE SERVICE CENTER, PISCATAWAY, NJ, US, vol. 1, no. 2, 1 June 2000 (2000-06-01), XP011028368 ISSN: 1524-9050**
• **TAKAHASHI A ET AL: "A METHOD FOR ROBUST LANE MARKING CANDIDATE SELECTION OF LANE RECOGNITION" SYSTEMS & COMPUTERS IN JAPAN, WILEY, HOBOKEN, NJ, US, vol. 31, no. 3, 1 March 2000 (2000-03-01), pages 11-18, XP000970054 ISSN: 0882-1666**
• **KASPRZAK W ET AL: "Adaptive road recognition and ego-state tracking in the presence of obstacles" INTERNATIONAL JOURNAL OF COMPUTER VISION KLUWER ACADEMIC PUBLISHERS NETHERLANDS, vol. 28, no. 1, 1998, pages 5-26, XP002507347 ISSN: 0920-5691**

**Description**

The present invention generally relates to a detection apparatus and method for detecting a road boundary and particularly, but not exclusively, to a detection apparatus for detecting an object on a road and a method of detecting a boundary of a roadway being traveled by a vehicle. Aspects of the invention relate to an apparatus, to a method and to a vehicle.

Japanese published patent application H10-214326A discloses a traveling control apparatus for a vehicle. This traveling control apparatus detects an edge from a picture image and thereby transforms the aligned edge row by means of a Hough transform to detect a roadway boundary. The Hough transform requires, for each detection of a point of the roadway boundary, drawing a curve in a parameter space, and adding an accumulated value of the points on the curve. The process has to be executed at all points that form the roadway boundary.

European patent EP 1227438 discloses a road lane recognition system in which edge points are detected as lane marker candidates. These candidates are then compared to road model points to detect the road lanes.

U.S. Patent Application No. 11/146,041 (entitled "Motion Detection Apparatus and Motion Detection Method," Japanese Patent Application No. 2004-278250 entitled "Motion Detector and Motion Detection Method," and Japanese Patent Application No. 2004-278250 entitled "Apparatus and Method for Detecting Motion," disclose apparatuses and methods for detecting and calculating speed information of objects in motion. U.S. Patent Application No. 11/146,041, Japanese Patent Application No. 2004-278250, and Japanese Patent Application No. 2004-278250 are hereby incorporated by reference in their entirety.

It is an aim of the invention to improve upon known technology. One or more embodiments of the present invention provides an apparatus and method which may be capable of simplifying the process required in detecting a roadway boundary. Other aims and advantages of the invention will become apparent from the following description, claims and drawings.

Aspects of the invention therefore provide an apparatus, a method and a vehicle as claimed in the appended claims.

According to another aspect of the invention there is provided a roadway boundary detecting apparatus comprising an imaging device for taking picture images ahead of a vehicle, a picture image memory connected to the imaging device for storing the picture images, a control unit connected to the picture image memory and a program executable on the control unit for calculating speed information for pixels of consecutive picture images taken by the imaging device, detecting lowest point positions in regions in which pixels having speed components continuously exist along a vertical direction, based on the speed information for the pixels and determining whether a straight line that connects the lowest point positions is a roadway boundary.

The program also transforms the lowest point positions to 3-dimensional positions in actual space and calculate a positional distribution of transformed lowest positions, extract a region with a high possibility of having the roadway boundary from the picture image based on the positional distribution of the transformed lowest positions; and determine whether a straight line which connects lowest point positions is a roadway boundary, based on the extracted region.

In an embodiment, the program transforms the lowest point positions into 3-dimensional positions using an imaging parameter of the imaging device with the assumption that all of the lowest point positions are located on a road surface.

In an embodiment, the program determines whether a gradient of the straight line connecting the lowest point positions in the extracted region is in a predetermined range established for each region, and thereby determines whether the straight line connecting the lowest point positions in each region is the roadway boundary.

In an embodiment, the roadway boundary includes at least one of a white line, a guardrail, a curb, a straight line connecting contact points between an exterior wall and a road surface, a straight line connecting contact points between a 3-dimensional object and the road surface, and a straight line connecting the road surface and a field.

According to a still further aspect of the invention there is provided a method of detecting a roadway boundary, comprising taking picture images ahead of a vehicle, calculating speed information for pixels of consecutive picture images and determining on the basis of the calculated speed information whether an oblique line formed by pixels including a speed component is a roadway boundary.

The method comprises transforming the lowest point positions to 3-dimensional positions in actual space and calculating a positional distribution of transformed positions, extracting a region with a high possibility of having the roadway boundary from the picture image based on the positional distribution and determining whether a straight line which connects lowest point positions is the roadway boundary, based on the extracted region.

The method may comprise transforming the lowest point positions into 3-dimensional positions using an imaging parameter of an imaging device with the assumption that all of the lowest point positions are located on a road surface.

The method may comprise determining whether a gradient of the straight line connecting the lowest point positions in the extracted region is in a predetermined range established for each region and thereby determining whether the straight line connecting the lowest point positions in each region is the roadway boundary.

In an embodiment, the roadway boundary includes at least one of a white line, a guardrail, a curb, a straight line connecting contact points between an exterior wall and a road surface, a straight line connecting contact points between a 3-dimensional object and the road surface, and a straight line connecting the road surface and a field.

According to another aspect of the invention there is provided a roadway boundary detecting apparatus comprising an image taking section positioned on a vehicle for taking a picture image ahead of the vehicle, the picture image comprising a plurality of pixels, a speed information calculation section for receiving a picture image taken by the camera and calculating speed information of each pixel of the picture image, a lowest point detection section for receiving the speed information and detecting lowest point positions in a region of the picture image based upon speed components continuously existing in a vertical direction relative to the roadway at the detected lowest point positions and a roadway boundary determining section for receiving the detected lowest point positions and for determining whether a straight line may be drawn connecting a plurality of the lowest point positions to thereby identify a continuous line of lowest point positions indicating a roadway boundary.

The apparatus comprises a 3-dimension positional distribution calculating section, wherein the 3-dimentional position detection section transforms the lowest point positions detected by the lowest point position detecting section to a 3 dimensional position on an actual space and calculates a positional distribution of the transformed positions, a roadway boundary region extracting section that extracts from the picture image an extracted region with a high possibility of including the roadway boundary of the roadway traveled by the vehicle, wherein the extracting is on the basis of the positional distribution calculated by the 3-dimension positional distribution calculating section, wherein the determining section determines, on the basis of the extracted region, whether or not a straight line, which connects the lowest point positions detected by the lowest point position detecting section is a straight line formed of points on the roadway surface and whether the gradient of the straight line corresponds to a predetermined gradient to indicate that the straight line is the roadway boundary of the roadway traveled by the vehicle.

In an embodiment, the 3 dimension positional distribution calculating section transforms the lowest point positions into 3 dimensional positions using a camera parameter of the imaging section, on the presumption that all of the lowest point positions detected by the lowest point position detecting section are located on the roadway surface.

In an embodiment, the determining section determines that the straight line connecting the lowest point positions existing in the region is the roadway boundary of the roadway traveled by the vehicle when the gradient of the straight line connecting the lowest point positions in the extracted region, is within a predetermined range established by each extracted region.

In an embodiment, the roadway boundary of the roadway traveled by the vehicle includes at least one of a white line, a guardrail, a curb, a straight line connecting contact points between an exterior wall and a roadway surface, a straight line connecting contact points between a 3 dimensional object and the roadway surface and a straight line connecting the roadway surface and other region.

According to yet another aspect of the invention there is provided a roadway boundary detecting apparatus comprising an imaging means for taking a picture image ahead of a vehicle, a speed information calculating means for calculating speed information of each pixel of the picture image taken by the imaging means, a lowest point position detecting means for detecting a lowest point position in a region in which pixels having speed components consecutively exist along the vertical direction, based on the speed information of each pixel and a determining means for determining whether a straight line, which connects the lowest point positions, is a roadway boundary.

The present invention will now be described, by way of example only, with reference to the accompanying drawings in which:

> FIG. 1 is a block diagram showing an example configuration of a roadway boundary detecting apparatus according to one or more embodiments of the present invention;

> FIG. 2 shows an example placement of a camera in a vehicle according to one or more embodiments of the present invention;

> FIG. 3 shows an example of a picture image taken by a camera according to one or more embodiments of the present invention;

> FIGS. 4A through 4F show an example of a process which is executed to obtain an edge picture image by normalizing the extracted edges according to one or more embodiments of the present invention;

> FIG. 5 shows an example of a speed picture image according to one or more embodiments of the present invention;

> FIG. 6 shows an example where a region for detecting roadway boundary is set on the speed picture image according to one or more embodiments of the present invention;

FIG. 7 shows an example of process for determining which region of a 2-dimensional region defining an X axis range and a Z axis range corresponds to a calculated 3-dimensional coordinate value according to one or more embodiments of the present invention;

FIG. 8 shows an example of process for calculating a 3-dimensional position distribution of lowest point positions according to one or more embodiments of the present invention;

FIG. 9 shows an example of process for executing a determination as to whether a straight line representative of the roadway boundary exists in the respective regions according to one or more embodiments of the present invention; and

FIG. 10 is a flowchart showing a process of the roadway boundary detecting apparatus according to one or more embodiments of the present invention.

Embodiments of the invention will be described with reference to the accompanying figures. Like items in the figures are shown with the same reference numbers. Further, the use of "S" in the figures is equivalent to the use of "Step" in the detailed description below.

In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

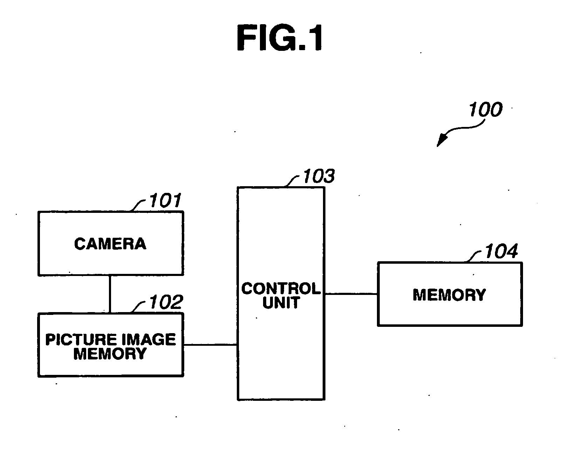

FIG. 1 is a block diagram showing an example configuration of a roadway boundary detecting apparatus according to one or more embodiments of the present invention. A roadway boundary detecting apparatus 100 is mounted on a vehicle. The roadway boundary detecting apparatus 100 comprises a camera 101 for taking a picture image ahead of a vehicle, picture image memory 102 for storing the picture image taken by camera 101, control unit 103 for executing picture image process of the picture image which was taken by camera 101 and which was stored in picture image memory 102, and memory 104 for storing a count value of a pixel counter, which will be discussed in detail later.

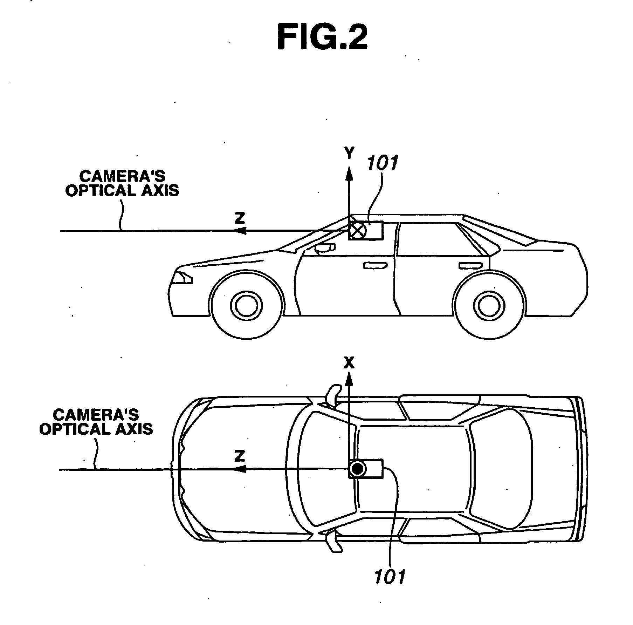

Camera 101 is a camera including an imaging element, for example, CCD and CMOS. Camera 101 continuously takes picture images ahead of the vehicle, and outputs them to picture image memory 102 for each frame. Camera 101 is mounted at an upper frontal portion in a vehicle passenger compartment, as shown in Fig. 2. More specifically, camera 101 is mounted so that an optical axis Z is directed in a frontal direction ahead of the vehicle, a horizontal axis X of an imaging plane is parallel to the ground surface, and a vertical axis Y of the imaging plane is perpendicular to the ground surface. The continuous picture images taken by camera 101 are outputted to picture image memory 102 and stored therein.

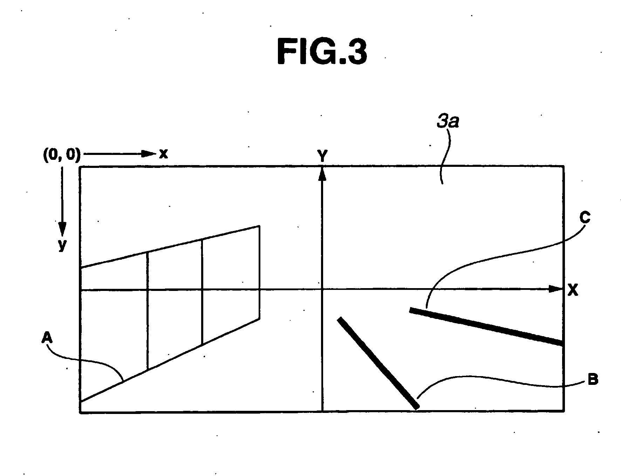

FIG. 3 shows an example of a picture image taken by camera 101 according to one or more embodiments of the present invention. A picture image 3a taken by camera 101 is represented by an x-y coordinate system (camera coordinate) in which the top left corner of the picture image is an origin, the x-axis extends from left to right, and the y-axis extends from top to bottom. In Fig. 3, the taken picture image 3a includes boundaries (roadway boundary) A, B, C of a roadway, such as a curb provided at the right or the left side of a road, a white line, a guardrail, an exterior wall, parked vehicle, and etc.

The control unit 103 executes a detection of a roadway boundary in the taken picture image 3a by executing an image process of the taken picture image 3a stored in picture image memory 102, as will be discussed later. For executing the detection of the roadway boundary in the taken picture image 3a, a moving speed of an object in the taken picture image 3a along the lateral direction is first detected, then a speed picture image, in which a moving direction and a moving speed of the object in the taken picture image 3a along the lateral direction is represented using a grade value (class mark), is generated.

More specifically, by reading the picture image taken by camera 101 from picture image memory 102 and by binarizing the picture image using a predetermined threshold with respect to the read picture image 3a, an edge of the object in the picture image is extracted. A center of the edge is accurately obtained by executing a thinning process with respect to each edge extracted in the picture image. The thinned edge is expanded so as to have a constant width, for example, of 3 pixels. By normalizing the extracted edge, it becomes possible to obtain an edge picture image in which each edge has an equivalent width.

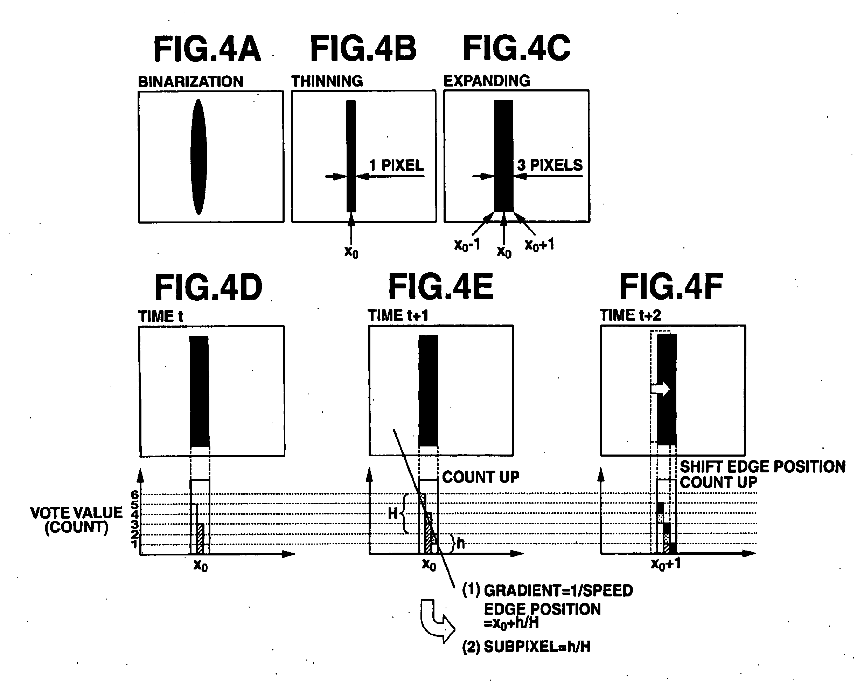

FIGS. 4A through 4F show an example of a process executed to obtain the edge picture image by normalizing the above discussed extracted edge according to one or more embodiments of the present invention. First, a binarization process is executed as to the edge picture image. The binarization process is a process of setting a pixel at a position where an edge is detected ("edge detected position") as 1, and of setting a pixel at a position where an edge is not detected ("edge undetected position") as 0. By executing the binarization process, a binary picture image shown in FIG. 4A is produced.

A thinning process is then executed in the produced binary picture image. The thinning process is a process of scaling down an edge width of the detected edge until reaching a predetermined pixel width. In FIG. 4B, a thinning is executed until an edge width of the edge becomes a predetermined width of 1 pixel. By thinning the edge until the edge width becomes a predetermined number of pixels, a center position, which becomes a center of the edge, is established. One of ordinary skill in the art will recognize that although a case of thinning the edge into a width of one pixel has been shown as an example, it may be thinned into any number of pixels.

An expanding process of expanding the edge width of the thinned edge is then executed. The expanding process is a process of expanding the edge width from the center position, established by the thinning process, toward the moving direction of the edge, and of expanding the edge width from the center position toward the opposite direction of the moving direction of the edge.

For example, in FIG. 4C, the edge width is expanded into 3 pixels, by expanding the thinned edge from the center position x0 of the edge toward the moving direction (a positive direction on the x-axis) by 1 pixel and by expanding the thinned edge from the center position x0 of the edge toward the opposition direction of the moving direction (a negative direction on the x-axis) by 1 pixel.

By executing the thinning process and the expanding process as discussed above, the edge width of the extracted edge picture image is uniformly normalized into a predetermined width in the moving direction of the edge.

A counting up process is then executed for the edge with the normalized edge width. The counting up process is a process of counting up a value at a memory address of an edge detected position, and of resetting a value at a memory address of an edge undetected position.

The counting up process of an edge will now be explained with reference to FIGS. 4C through 4F. In order to simplify the explanation, the assumption is made that the edge moves in the positive direction on the x-axis. Cases in which the edge moves in the negative direction on the x-axis, directions on the y-axis, or 2-dimensional directions can similarly be explained.

As shown in FIG. 4C, in a frame, the edge has a center position at a position x0, and is expanded from the center position by a pixel in the edge moving direction to a position x0+1, and from the center position by a pixel in the direction opposite the edge moving direction to a position x0-1.

In such cases, count values of the edge detecting positions x0-1, x0, and x0+1 are counted up by 1, and the count values of the edge undetected positions are reset. For example, in FIG. 4D, since an edge is detected at the positions x0-1, x0 and x0+1 at time t, the count value is counted up at each position. Thus, the count value of position x0+1 is 1, the count value of position x0 is 3, and the count value of position x0-1 is 5. Since the edge did not move at time t+1, as shown in FIG. 4E, the edge is detected at each of positions x0-1, x0 and x0+1, and the count values of positions x0-1, x0 and x0+1 are each counted up by 1. Thus, the count value of position x0+1 becomes 2, the count value of position x0 becomes 4, and the count value of position x0-1 becomes 6.

Further, as shown in FIG. 4F, at time t+2 the edge is shifted in the positive direction of the x-axis by one pixel, and the edge is therefore detected at positions x0, x0+1 and x0+2. Accordingly, the count values at the edge detected positions x0, x0+1 and x0+2 are counted up, and the count value at the edge undetected position x0-1 is reset. As a result, as shown in FIG. 4F, the count value of position x0+2 becomes 1, the count value of position x0+1 becomes 3, and the count value at position x0 becomes 5. Further, the count value of the edge undetected position x0-1 is reset, and therefore becomes 0. In this way, the count values of the edge detected positions are counted up, and the count values of the edge undetected positions are reset.

In FIGS. 4A through 4F, although count values were detected at three positions of a center position (x0) of the edge, a position (x0+1) shifted by one pixel from the center position in the edge moving direction, and a position (x0-1) shifted by one pixel from the center position in the direction opposite the edge moving direction, as long as a gradient of the count value, to be discussed later, is obtained, the count values may be detected at any number, two or more, of positions along the edge moving direction.

If a frame rate is set at a sufficiently high value as compared with an edge moving speed, the edge is detected at the same position several times in consecutive frames. For example, in the example of FIGS. 4A through 4F, at position x0, the edge is detected twice, at time t and time t+1. Accordingly, when the count value is counted at the position where the edge is detected, the count value becomes equal to the time (number of frames). Specifically, the minimum count value h in the count values of the edge represents the number of frames in which the edge exists at the same position, once the edge has moved.

Next, a moving speed, a moving direction, and a position of the edge are calculated.

First, the gradient of the count values in the moving direction is calculated. Based on the gradient, the moving speed, the moving direction, and the position of the edge are calculated. For example, in FIG. 4E, the count values of positions x0-1, x0 and x0+1 are 6, 4, and 2, respectively. Accordingly, by subtracting the count value 2 of position x0+1 from the count value 6 of position x0-1, the gradient of the count value is calculated as H = (6-2) = 4. Since here, H = {(the elapsed time period from a moment the edge moved to position x0-1 to the present moment) - (the elapsed time period after the edge moved to position x0+1)}, a time period (number of frames) it takes for the edge to pass the pixel of position x0 is hereby calculated. Accordingly, obtaining the gradient H of the count value is obtaining the number of the frames required for edge to pass one pixel, and thus, based on the gradient H of the count value, the moving speed 1/H of the edge can be calculated.

FIG. 4E shows that 4 frames were required to move one pixel, and therefore the moving speed of the edge is calculated as 1/4 (pixel per frame). Similarly, in FIG. 4F, H = (5 - 1) = 4 is also obtained, and therefore, the moving speed of the edge is 1/4 (pixel per frame).

The moving direction of the edge is determined from the magnitude of the count value. A count value of a position at which an edge is newly detected after a movement of the edge is 1, and is the smallest of the count values of the respective positions. Accordingly, the count value of the position at a side in the direction in which the edge moves ("edge moving direction") is small, and the count value at a side in the direction opposite the edge moving direction is large. From this, the moving direction of the edge can be determined.

Further, if a frame rate is set at a sufficiently high value as compared with a moving speed of the edge, the detected object can be assumed to move with constant speed. The minimum count value h in the count values of the present positions represents the amount of time the edge is detected at the same position, or how many frames the edge stays at the same position, after the edge moves.

Because of the above, when the center position of the edge is established as x0, the position of the edge is obtained by:

$$\text{Edge position} = x0 + h/H.$$

For example, in FIG. 4E, the speed of the edge is 1/4 (pixel/frame). Since at time t+1 the edge is continuously detected at the same position for 2 frames, the magnitude of movement of the edge at time t+1 from position x0 is calculated by

$$[0.5 \text{ pixel} = 2 \text{ (frame)} \times 1/4 \text{ (pixel/frame)}].$$

From the above, it becomes possible to count up the count value of the position at which the edge is detected, and to calculate the moving speed and the moving direction of the edge based on the gradient of the counted up count values.

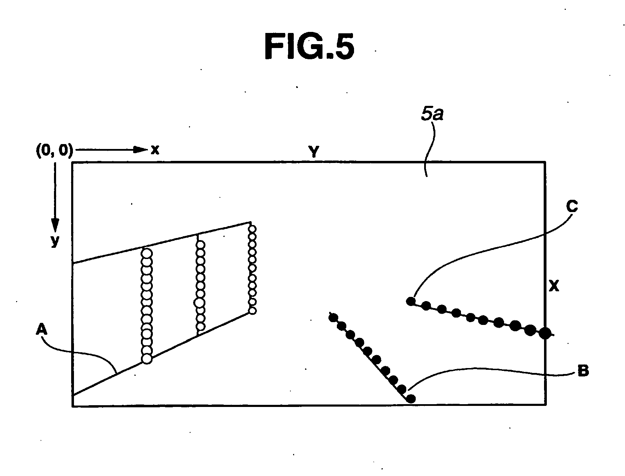

A speed picture image is produced, in which the speed information of an object in the taken picture image 3a that is calculated by the above process is represented by a predetermined class mark. In one or more embodiments, the pixels at which speed components are detected are represented by circles in the speed picture image 5a, as shown in Fig. 5. The circles function as class marks of the speed information, where the circles become larger as the moving speed of the pixels become higher. Further, the moving direction is expressed by representing a speed directed to the right hand side as a black circle and by representing a speed directed to the left hand side as a white circle. That is, in FIG. 5, speed directed to the right hand side of the picture image is detected from the roadway boundaries B and C located at the right hand side of the roadway, and a speed directed to the left hand side of the picture image is detected from the exterior wall A located at the left hand side of the roadway.

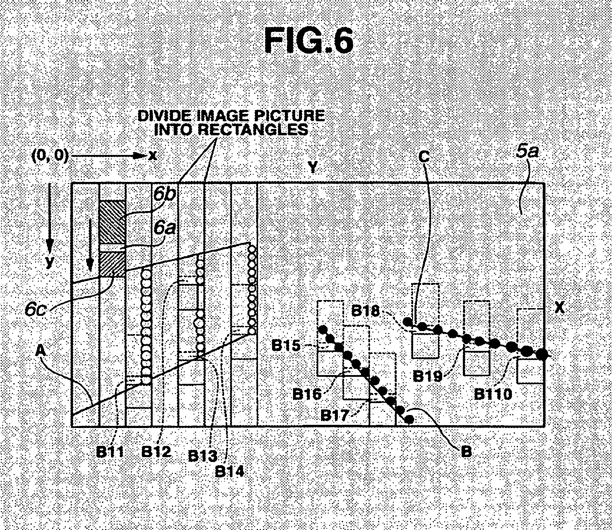

Next, one or more roadway boundary detecting regions are established for detecting a roadway boundary in the calculated speed picture image 5a. More specifically, as shown in FIG. 6, by defining a plurality of rectangular regions on the speed picture image 5a, the speed picture image is divided into the respectively defined rectangular regions. For each rectangular region, points that form roadway boundaries in the speed picture image 5a are detected.

The points forming the roadway boundary are detected as points located at the lowest portions ("lowest point") of the rectangular regions in which pixels having speed components consecutively exist. Therefore, each rectangular region is scanned from a lower portion of the picture image toward an upper portion of the picture image. If, within a rectangular region, pixels having speed components consecutively appear for at least threshold T1, it is determined that an object forming the roadway boundary exists, and the lowest point thereof is detected. For facilitating the process in the present embodiment, for each rectangular region, a point forming a roadway boundary, that is, a line including the lowest point, is detected. In other words, when a line including a pixel having a speed component consecutively exists for at least a predetermined threshold T1, it is determined that there exists an object forming the roadway boundary. Thus, the position having the lowest point is detected. By this process, the lowest point positions B11 through B110 in FIG. 6 are detected.

Next, in lines B11 through B110 which contain the lowest points detected in each rectangular region, X-coordinates of the width center points of the rectangular regions are established as the X-coordinates of the lowest points for each line, and the coordinate values Bp1 through Bp10 are calculated as representative coordinate values of the respective lowest points. Based on the calculated X-coordinate values Bp1 through Bp10 of the lowest points in the respective lines and the camera parameters of camera 101, 3-dimensional coordinate values RB1 through RB10, which are in actual space and which correspond to the respective lowest points, are calculated by triangulation. Here, the 3-dimensional coordinate values are calculated with the assumption that all of the lowest point positions are on the road surface.

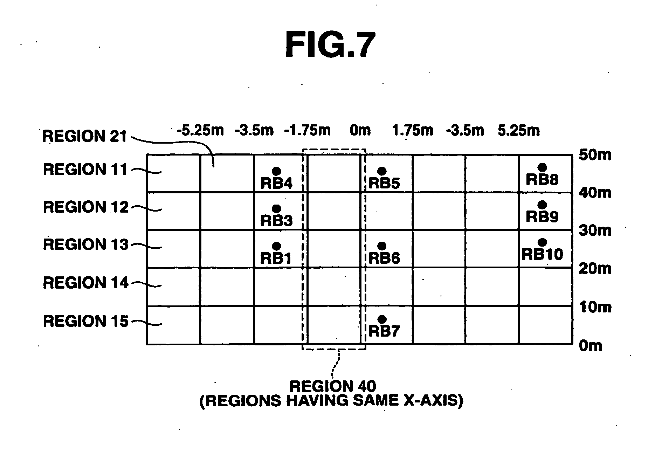

It is then determined which 2-dimensional regions, defined by the X-axis range and the Z-axis range shown in FIG. 7, correspond to the calculated 3-dimensional coordinate values RB1 through RB10. For example, in the X-axis direction, eight regions are defined as follows: a region less than -5.25 m, a region between -5.25 m and -3.5 m, a region between -3.5m and -1.75 m, a region between -1.75m and 0m, a region between 0m and 1.75 m, a region between 1.75 m and 3.5 m, a region between 3.5m and 5.25 m, and a region greater than or equal to 5.25 m. In the Z-axis direction, five regions are defined as follows: 0 m to 10 m, 10 m to 20 m, 20 m to 30 m, 30 m to 40 m, and 40 m to 50m. Accordingly, 2-dimensional regions of 8×5 are defined, which are divided according to the regions established along the X axis direction and the Z axis direction. The defined regions may be usefully established in the order of meters.

In the 8×5 2-dimensional regions, names for distinguishing the regions are given, and each region is represented by a region ij using a column (X-axis region) i and a row (Z-axis region) j. For example, as shown in FIG. 7, the region in the first column and the first row is represented as region 11, the region at the first column and the second row is represented as region 12, and the region in the second column and the first row is represented as region 21. Further, a region having each of the regions in a column is represented as region i0, and a region having each of the regions in a row is represented as region 0j. For example, in the example shown in FIG. 7, a region including every region in the fourth column is represented as region 40.

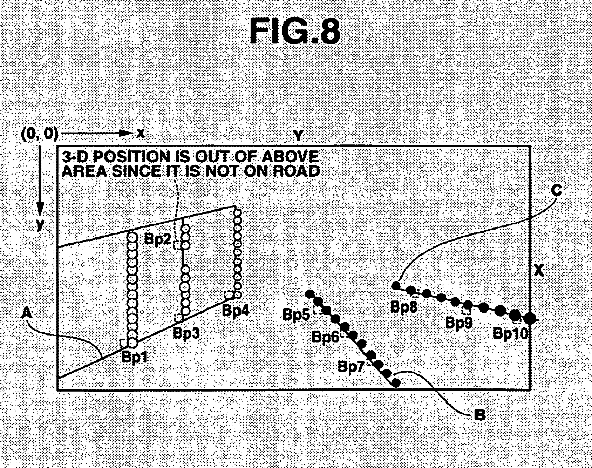

If the 3-dimensional coordinates of the lowest point positions calculated by the above discussed process are included in one of the 8×5 regions, the count value of a region including a lowest point position is incremented by 1, and the 3-dimensional positional distribution of the lowest point positions is calculated. For example, since the coordinate value Bp1 of the lowest point shown in FIG. 8 is included in region 33 shown in FIG. 7, the count value of region 33 is incremented by 1. Similarly, since the coordinate value Bp3 of the lowest point is included in region 32, and the coordinate value Bp4 of the lowest point is included in region 31, the count values of the respective regions are respectively incremented by 1. Since the coordinate value Bp2 of the lowest point in FIG. 8 is not included in any region shown in FIG. 7, the count value thereof is not incremented.

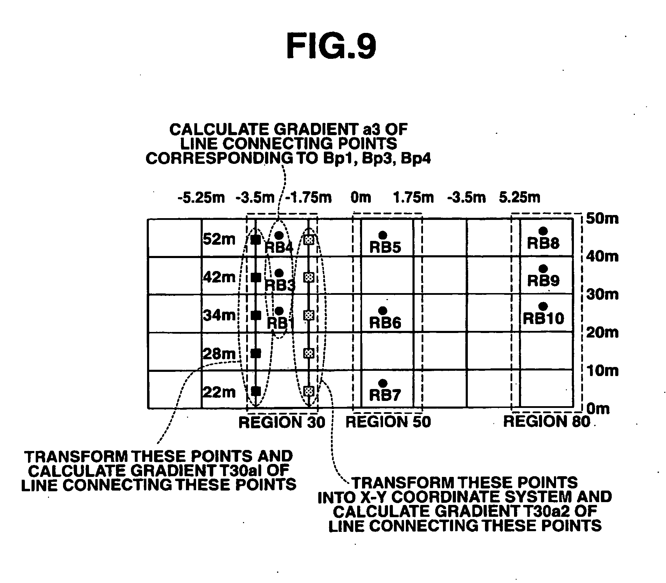

FIG. 9 shows an example of the 3-dimensional positional distribution of the lowest point positions obtained as a result of the incrementing process of the count value with respect to each of the 8×5 regions. Control unit 103 extracts as a roadway boundary region the regions with high possibility that the roadway boundary exists therein, based on the 3-dimensional positional distribution of the lowest point positions shown in Fig. 9. That is, in the 3-dimensional positional distribution, a column having count value in a plurality of Z-axis regions with the same X-axis region is extracted as a roadway boundary region, in which a straight line indicative of the roadway boundary exists. In the example shown in FIG. 9, since the count value exists in a plurality of Z-axis regions within each of the regions 30, 50 and 80, the regions 30, 50 and 80 are extracted as roadway boundary regions.

Next, for each region extracted as a roadway boundary region, it is determined whether a straight line indicative of the roadway boundary exists in each of the extracted roadway boundary regions. More specifically, the gradient of the straight line is calculated by executing a regression analysis in the x y coordinate system on the basis of the lowest point positions (coordinate values of the lowest points) in each roadway boundary region. In the example shown in FIG. 9, in the region 30, the gradient a3 of the straight line is calculated by executing the regression analysis in the x y coordinate system based on the coordinate values Bp1, Bp3, Bp4 of the lowest points. In the region 50 and the region 80, the gradients a5 and a8 of the respective roadway boundary regions are similarly calculated. If the calculated gradient is within a predetermined range, it is determined that a straight line indicative of the roadway boundary exists in the extracted roadway boundary region.

That is, if the gradient an, which is calculated based on the coordinate values of the lowest points as discussed above, is within a range defined by a gradient Tn0a1 and a gradient Tn0a2, it is determined that a straight line Ln indicative of the roadway boundary exists in the extracted roadway boundary region. Here, Tn0a1 is calculated by transforming a left end coordinate of the X-axis region and a representative coordinate of each Z-axis region into the x y coordinate system and by executing the regression analysis thereof, and Tn0a2 is calculated by transforming a right end coordinate of the X-axis region and the representative coordinate of each Z-axis region into the x y coordinate system and by executing the regression analysis thereof. Here, a center value of the Z-coordinate range in the Z-axis region is used as a representative coordinate of the Z-axis region. By executing this process for all of the extracted roadway boundary regions, it is possible to detect the straight lines indicative of all roadway boundaries in the speed picture image 5a.

In the example shown in FIG. 9, in the extracted roadway boundary region 30, a gradient t30a1 is calculated by transforming coordinates (X, Z) = (-3.5, 45), (-3.5, 35), (-3.5, 25), (-3.5, 15) and (-3.5, 5) into x y coordinates and by executing the regression analysis thereof. Further, a gradient t30a2 is calculated by transforming coordinates (X, Z) = (-1.75, 45), (-1.75, 35), (-1.75, 25), (-1.75, 15) and (-1.75, 5) into x y coordinates and by executing the regression analysis thereof. Then, it is determined whether or not the calculated gradient a3 exists in a range defined by T30a1 and T30a2.

If the gradient a3 exists in the range defined by T30a1 and T30a2, it is determined that a straight line L3 indicative of the roadway boundary exists in extracted roadway boundary region 30. Similarly, in case of extracted roadway boundary region 50, if the gradient a5 exists in a range defined by T50a1 and T50a2, it is determined that the straight line L5 exists in extracted roadway boundary region 50. In case of extracted roadway boundary region 80, if the gradient a8 exists in a range defined by T80a1 and T80a2, it is determined that the straight line L8 exists in extracted roadway boundary region 80.

By this process, when it is determined that the straight lines exist in the roadway boundary regions (regions 30, 50, 80), by distinguishing that the straight line is a roadway boundary in the picture imaged taken by camera 101, it becomes possible to detect a roadway boundary from the picture image taken by camera 101.

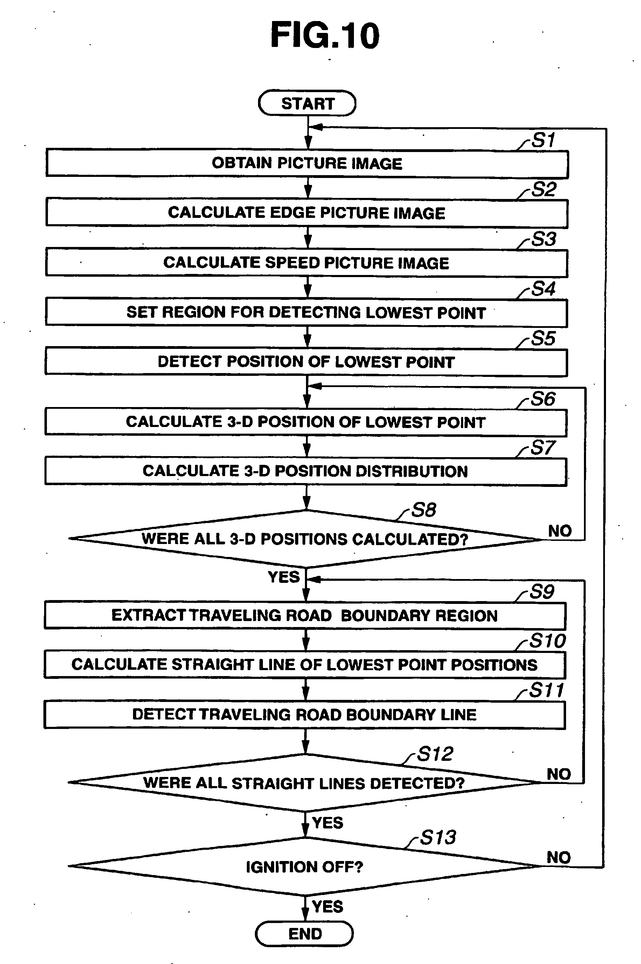

FIG. 10 is a flowchart showing a process of the roadway boundary detecting apparatus according to one or more embodiments of the present invention. The process shown in FIG. 10 may be executed as a program comprising steps S1-S10 that is started by control unit 103 when an ignition switch, not shown here, is turned on. For example, such a program may include a memory device for storing instructions executable by an apparatus, control unit and/or a CPU .

At step S1, a picture image ahead of the vehicle, which is taken by camera 101, is obtained from picture image memory 102. At step S2, an edge picture image, which is obtained by extracting an outline of an object in the taken picture image, is produced by executing a edge extracting process of the picture image. At step S3, speed information of the edge included in each pixel is calculated as discussed above, and the speed picture image 5a is calculated by transforming the calculated speed information into the predetermined class mark.

At step S4, rectangular regions for detecting the lowest point positions are established on the calculated picture image 5a. At step S5, the lowest point positions are detected by scanning the picture image in each rectangular region from a lower portion toward an upper portion and by determining whether or not a line having a pixel having a speed component continuously exists.

At step S6, by obtaining the representative coordinate values Bp1 through Bp10 of the detected lowest point positions, and by assuming that these points exist on the road surface, 3-dimensional positions corresponding to the representative coordinate values Bp1 through Bp10 in actual space are calculated using the camera parameter of camera 101. That is, the 3-dimensional coordinate values RB1 through RB10 are calculated. At step S7, it is determined which region of the 2-dimensional region defining the X-axis range and the Z-axis range corresponds to each of the calculated 3-dimensional coordinate values RB1 through RB10. If the corresponding region exists, the count value of the region is incremented by 1. If there is no corresponding region, the incrementing of the count value is not executed. Thus, a 3-dimension positional distribution of the lowest point positions is calculated.

At step S8, it is determined whether or not the 3-dimensional positions of all of the detected lowest point positions are calculated. When it is determined that the 3-dimensional positions of all of the detected lowest point positions have not been calculated, the program repeats the process from step S6. If it is determined that the 3-dimensional positions of all of the detected lowest point positions are calculated, the program proceeds to step S9. At step S9, from the obtained 3-dimensional position distribution, the regions in which count values exist in a plurality of Z-axis regions for the same X axis region are extracted as regions with a high possibility of having a roadway boundary.

At step S10, the gradient of the straight line is calculated by executing a regression analysis in the x y coordinate system, based on the lowest point in the extracted roadway boundary region. When the calculated gradient exists in the range defined by the gradient of the x y coordinate system, which is calculated based on the a left end coordinate of the X-axis region and the representative coordinate of each Z axis coordinate, and the right end coordinate of the X axis region and the representative coordinate of each Z axis coordinate, it is determined that the straight line representative of the roadway boundary exists in the roadway boundary region.

At step S11, within the extracted roadway boundary regions determined to have a straight line representative of the roadway boundary therein, a straight line connecting the lowest points is detected as a roadway boundaries in the picture image. At step S12, it is determined whether straight lines representative of all roadway boundaries have been detected from the extracted roadway boundary regions. When it is determined that the straight lines representative of all of the roadway boundaries have not been detected, the program repeats the process from step S9. Alternatively, when it is determined that the straight lines representative of all of the roadway boundaries have been detected, the program proceeds to step S 13.

At step S 13, it is determined whether or not the ignition switch of the host vehicle is turned off. If it is determined that the ignition switch is not turned off, the program returns to step S1 to repeat the process starting from step S1. Alternatively, if it is determined that the ignition switch is turned off, the program is terminated.

According to one or more embodiments of the present invention, one or more of the following advantageous operations and effects may be obtained.

(1) The regions for detecting the lowest point position are established on the speed picture image calculated based on the picture image taken by camera 101, and the points forming the straight line representative of the roadway boundary are detected. By this arrangement, roadway boundaries, such as a white line on a road, that are included in the picture image taken by camera 101 are invariably taken as an oblique line, because the roadway boundary is a straight line component parallel to the optical axis, and the oblique line tends to generate continued speed in the vertical direction. Further, even for a roadway boundary formed by contact points between a 3 dimensional object and a road surface, it is possible to detect continued speed in the height direction. Accordingly, detection of various kinds of roadway boundaries with high accuracy is possible.

(2) The detected lowest point positions are treated as points on the road surface, and the 3-dimensional positions thereof are calculated using the camera parameter of camera 101. By this arrangement, it becomes possible to execute a filtering process that filters a point that does not exist on the road surface but was detected as a lowest point, by causing it to largely deviate from the region defined by X-axis and Z-axis when the 3-dimensional position thereof is calculated. Therefore, it is possible to extract, with high accuracy, only the lowest points that form roadway boundaries.

(3) The determination is executed as to whether the straight line included in the extracted X Z coordinate roadway boundary regions is a straight line representative of a roadway boundary, by comparing the gradient calculated based on the lowest points and the gradient calculated based on the range defined by X-axis and Z-axis. By this arrangement, it is possible to eliminate false detection, which may not have been filtered by the filtering process of the 3-dimensional transformation, and extracting of the roadway boundary can thereby be reliably executed.

The roadway boundary detecting apparatus according to one or more embodiments of the present invention may be varied, for example, by one or more of the following.

(1) One or more embodiments of the present invention have been explained using the example of obtaining the edge picture image by executing the edge extracting processing for the taken picture image, updating the pixel counter of the pixel including the edge, and calculating the speed component of the edge in each pixel on the picture image based on the counter value of the corresponding pixel counter. However, the apparatus is not limited thereby, and may be arranged to calculate an optical flow using a commonly used method such as a gradient method or block matching.

(2) One or more embodiments of the present invention have been explained using the example of calculating the speed picture image 5a using the class mark as shown in FIG. 5. However, the invention is not limited thereby, and the speed picture image may be represented by other class marks, such as a speed picture image wherein the speed and the speed direction are represented in the form of a vector.

(3) One or more embodiments of the present invention have been explained using an example of mounting the roadway boundary detecting apparatus 100 on a vehicle. However, the invention is not limited to this, and the apparatus 100 may be mounted on any other mobile unit.

(4) One or more embodiments of the present invention have been explained using an example of detecting a white line or the contact point of the road surface with an exterior wall, the invention is not limited thereby, and other roadway boundaries can be detected, such as a boundary between a road surface and a curb, a guardrail or a parked vehicle, or a boundary between a road surface and another region (paddy, field, etc).

While the invention has been described with respect to a limited number of embodiments, those skilled in the art, having benefit of this disclosure, will appreciate that other embodiments can be devised which do not depart from the scope of the appended claims. Accordingly, the scope of the invention should be limited only by the attached claims.

This application claims priority from Japanese Patent Application No. 2005-351783, filed 6th December 2005.

**Claims**

1. A detection apparatus (100) for detecting road boundaries (A, B, C) on a straight road comprising:

   imaging device (101) for taking a picture image (3a) ahead of a vehicle;
   a memory (102) connected to the imaging device (101) for storing the picture images; and

control means (103) connected to the picture image memory (102), the control means (103) being arranged to:

calculate speed information for pixels of consecutive picture images (5a) taken by the imaging device (101);

detect lowest point positions in regions in which pixels having speed components continuously exist along a vertical direction, based on the speed information for the pixels; and

determine whether a straight line that connects the lowest point positions is a roadway boundary (A, B, C),

and wherein the control means (103) is further arranged to:

transform the lowest point positions to 3-dimensional positions in actual space and calculate a positional distribution of transformed lowest positions;

extract a region with a high possibility of having the roadway boundary (A, B, C) from the picture image (3a), based on the positional distribution of the transformed lowest positions; and

determine whether a straight line which connects lowest point positions is a roadway boundary (A, B, C), based on the extracted region.

2.  The apparatus (100) as claimed in claim 1, wherein the control means (103) is arranged to transform the lowest point positions into 3-dimcnsional positions using an imaging parameter of the imaging device (101), on the assumption that all of the lowest point positions are located on a road surface.

3.  The apparatus (100) as claimed in claim 1 or 2, wherein the control means (103) is arranged to determine whether a gradient of the straight line connecting the lowest point positions in the extracted region is in a predetermined range established for each region, thereby to determine whether the straight line connecting the lowest point positions in each region is the roadway boundary (A, B, C).

4.  The apparatus (100) as claimed in any preceding claim, wherein a roadway boundary (A, B, C) is deemed to include at least one of a white line, a guardrail, a curb, a straight line connecting contact points between an exterior wall and a road surface, a straight line connecting contact points between a 3-dimensional object and the road surface, and a straight line connecting the road surface and a field.

5.  A detection method for detecting road boundaries (A, B, C) on a straight road, the method comprising:

taking picture images (3a) ahead of a vehicle;

storing the picture images (3a);

calculating speed information for pixels of consecutive picture images (5a);

detecting lowest point positions in regions in which pixels having speed components continuously exist along a vertical direction, based on the speed information for the pixels;

determining whether an oblique line formed by pixels including a speed component is a roadway boundary (A, B, C), on the basis of the calculated speed information;

wherein the determining step comprises:

transforming the lowest point positions to 3-dimensional positions in actual space and calculating a positional distribution of transformed lowest positions;

a region with a high possibility of having the roadway boundary from the picture image (3a) is extracted, based on the positional distribution of the transformed lowest positions; and

whether a straight line which connects lowest point positions is a roadway boundary (A, B, C) is determined based on the extracted region.

6.  The method as claimed in claim 5, comprising transforming the lowest point positions into 3-dimensional positions using an imaging parameter of an imaging device (101), on the assumption that all of the lowest point positions are located on a road surface.

7.  The method as claimed in claim 5 or claim 6, comprising determining whether a gradient of the straight line connecting the lowest point positions in the extracted region is in a predetermined range established for each region, and thereby determining whether the straight line connecting the lowest point positions in each region is the roadway boundary (A, B, C).

8.  The method as claimed in any of claims 5 to 7 wherein the roadway boundary (A, B, C) is deemed to include at least one of a white line, a guardrail, a curb, a straight line connecting contact points between an exterior wall and a road surface, a straight line connecting contact points between a 3-dimensional object and the road surface, and a straight line connecting the road surface and a field.

**9.** A vehicle having an apparatus (100) as claimed in any of claims 1 to 4 or adapted to use a method as claimed in any of claims 5 to 8.


**Patentansprüche**

**1.** Detektionsvorrichtung (100) zum Detektieren von Straßenrändern (A, B, C) auf einer geraden Straße, wobei die Vorrichtung Folgendes umfasst:

eine Bildgabevorrichtung (101) zum Aufnehmen eines Bildes (3a) vor einem Fahrzeug;
einen Speicher (102), der mit der Bildgabevorrichtung (101) verbunden ist, zum Speichern der Bilder; und
ein Steuerungsmittel (103), das mit dem Bildspeicher (102) verbunden ist, wobei das Steuerungsmittel (103) dafür ausgelegt ist:

Geschwindigkeitsinformationen für Pixel von aufeinanderfolgenden Bildern (5a), die durch die Bildgabevorrichtung (101) aufgenommen wurden, zu berechnen;
Positionen niedrigster Punkte in Regionen, in denen Pixel, die Geschwindigkeitskomponenten aufweisen, entlang einer vertikalen Richtung kontinuierlich vorhanden sind, anhand der Geschwindigkeitsinformationen für die Pixel zu detektieren; und
festzustellen, ob eine gerade Linie, welche die Positionen niedrigster Punkte verbindet, ein Straßenrand (A, B, C) ist,

und wobei das Steuerungsmittel (103) des Weiteren dafür ausgelegt ist:

die Positionen niedrigster Punkte in dreidimensionale Positionen im wirklichen Raum umzuwandeln und eine Positionsverteilung umgewandelter niedrigster Positionen zu berechnen;
eine Region, bei der eine hohe Wahrscheinlichkeit besteht, dass sich in ihr der Straßenrand (A, B, C) befindet, anhand der Positionsverteilung der umgewandelten niedrigsten Positionen aus den Bildern (3a) zu extrahieren; und
anhand der extrahierten Region zu bestimmen, ob eine gerade Linie, die Positionen niedrigster Punkte verbindet, ein Straßenrand (A, B, C) ist.

**2.** Vorrichtung (100) gemäß Anspruch 1, wobei das Steuerungsmittel (103) dafür ausgelegt ist, die Positionen niedrigster Punkte unter Verwendung eines Bildgabeparameters der Bildgabevorrichtung (101) und unter der Annahme, dass sich alle Positionen niedrigster Punkte auf einer Fahrbahn befinden, in dreidimensionale Positionen umzuwandeln.

**3.** Vorrichtung (100) gemäß Anspruch 1 oder 2, wobei das Steuerungsmittel (103) dafür ausgelegt ist zu bestimmen, ob sich ein Gradient der geraden Linie, welche die Positionen niedrigster Punkte in der extrahierten Region verbindet, in einem vorgegebenen Bereich, der für jede Region festgelegt ist, befindet, um dadurch zu bestimmen, ob die gerade Linie, welche die Positionen niedrigster Punkte in jeder Region verbindet, der Straßenrand (A, B, C) ist.

**4.** Vorrichtung (100) gemäß einem der vorangehenden Ansprüche, wobei zum Straßenrand (A, B, C) eine weiße Linie und/oder eine Leitplanke und/oder eine Bordsteinkante und/oder eine gerade Linie, die Kontaktpunkte zwischen einer Außenwand und einer Fahrbahn verbindet, und/oder eine gerade Linie, die Kontaktpunkte zwischen einem dreidimensionalen Objekt und der Fahrbahn verbindet, und/oder eine gerade Linie, welche die Fahrbahn und ein Feld verbindet, gehören sollen.

**5.** Detektionsverfahren zum Detektieren von Straßenrändern (A, B, C) auf einer geraden Straße, wobei das Verfahren Folgendes umfasst:

Aufnehmen von Bildern (3a) vor einem Fahrzeug;
Speichern der Bilder (3a);
Berechnen von Geschwindigkeitsinformationen für Pixel von aufeinanderfolgenden Bildern (5a);

Detektieren von Positionen niedrigster Punkte in Regionen, in denen Pixel, die Geschwindigkeitskomponenten aufweisen, entlang einer vertikalen Richtung kontinuierlich vorhanden sind, anhand der Geschwindigkeitsinformationen für die Pixel;

Bestimmen anhand der berechneten Geschwindigkeitsinformationen, ob eine schräge Linie, die durch Pixel gebildet wird, die eine Geschwindigkeitskomponente enthalten, ein Straßenrand (A, B, C) ist;

wobei der Schritt des Bestimmens Folgendes umfasst:

Umwandeln der Positionen niedrigster Punkte in dreidimensionale Positionen im wirklichen Raum und Berechnen einer Positionsverteilung umgewandelter niedrigster Positionen;

eine Region, bei der eine hohe Wahrscheinlichkeit besteht, dass sich in ihr der Straßenrand befindet, wird anhand der Positionsverteilung der umgewandelten niedrigsten Positionen aus den Bildern (3a) extrahiert, und

ob eine gerade Linie, die Positionen niedrigster Punkte verbindet, ein Straßenrand (A, B, C) ist, wird anhand der extrahierten Region bestimmt.

6. Verfahren gemäß Anspruch 5, das Folgendes umfasst: Umwandeln der Positionen niedrigster Punkte in dreidimensionale Positionen unter Verwendung eines Bildgabeparameters einer Bildgabevorrichtung (101) unter der Annahme, dass sich alle Positionen niedrigster Punkte auf einer Fahrbahn befinden.

7. Verfahren gemäß Anspruch 5 oder Anspruch 6, das Folgendes umfasst: Bestimmen, ob sich ein Gradient der geraden Linie, welche die Positionen niedrigster Punkte in der extrahierten Region verbindet, in einem vorgegebenen Bereich, der für jede Region festgelegt ist, befindet, um dadurch zu bestimmen, ob die gerade Linie, welche die Positionen niedrigster Punkte in jeder Region verbindet, der Straßenrand (A, B, C) ist.

8. Verfahren gemäß einem der Ansprüche 5 bis 7, wobei zum Straßenrand (A, B, C) eine weiße Linie und/oder eine Leitplanke und/oder eine Bordsteinkante und/oder eine gerade Linie, die Kontaktpunkte zwischen einer Außenwand und einer Fahrbahn verbindet, und/oder eine gerade Linie, die Kontaktpunkte zwischen einem dreidimensionalen Objekt und der Fahrbahn verbindet, und/oder eine gerade Linie, welche die Fahrbahn und ein Feld verbindet, gehören sollen.

9. Fahrzeug, das eine Vorrichtung (100) gemäß einem der Ansprüche 1 bis 4 aufweist oder dafür ausgelegt ist, ein Verfahren gemäß einem der Ansprüche 5 bis 8 zu nutzen.

**Revendications**

1. Appareil de détection (100) pour détecter des frontières de route (A, B, C) sur une route droite, comprenant :

un dispositif d'imagerie (101) pour prendre une image (3a) devant un véhicule ;

une mémoire (102) connectée au dispositif d'imagerie (101) pour stocker les images ; et

un moyen de commande (103) connecté à la mémoire d'images (102), le moyen de commande (103) étant agencé pour :

calculer des informations de vitesse pour des pixels d'images consécutives (5a) prises par le dispositif d'imagerie (101) ;

détecter des positions de points les plus basses dans des régions dans lesquelles des pixels ayant des composantes de vitesse existent continuellement le long d'une direction verticale, sur la base des informations de vitesse pour les pixels ; et

déterminer si une ligne droite qui connecte les positions de points les plus basses est une frontière de route (A, B, C),

et dans lequel le moyen de commande (103) est en outre agencé pour :

transformer les positions de points les plus basses en positions tridimensionnelles dans l'espace réel et calculer une répartition positionnelle des positions les plus basses transformées ;

extraire une région avec une grande possibilité d'avoir la frontière de route (A, B, C) à partir de l'image (3a), sur la base de la répartition positionnelle des positions les plus basses transformées ; et

déterminer si une ligne droite qui connecte les positions de points les plus basses est une frontière de route (A, B, C) sur la base de la région extraite.

**2.** Appareil (100) selon la revendication 1, dans lequel le moyen de commande (103) est agencé pour transformer les positions de points les plus basses en positions tridimensionnelles en utilisant un paramètre d'imagerie du dispositif d'imagerie (101), en supposant que toutes les positions de points les plus basses sont situées sur une surface de route.

**3.** Appareil (100) selon la revendication 1 ou la revendication 2, dans lequel le moyen de commande (103) est agencé pour déterminer si un gradient de la ligne droite connectant les positions de points les plus basses dans la région extraite est dans une plage prédéterminée établie pour chaque région, pour déterminer de ce fait si la ligne droite connectant les positions de points les plus basses dans chaque région est la frontière de route (A, B, C).

**4.** Appareil (100) selon l'une quelconque des revendications précédentes, dans lequel il est considéré qu'une frontière de route (A, B, C) inclut au moins l'un d'une ligne blanche, un parapet, une bordure, une ligne droite connectant des points de contact entre une paroi extérieure et une surface de route, une ligne droite connectant des points de contact entre un objet tridimensionnel et la surface de route, et une ligne droite connectant la surface de route et un champ.

**5.** Méthode de détection pour détecter des frontières de route (A, B, C) sur une route droite, la méthode comprenant :

la prise d'images (3a) devant un véhicule ;
le stockage des images (3a) ;
le calcul d'informations de vitesse pour des pixels d'images consécutives (5a) ;
la détection de positions de points les plus basses dans des régions dans lesquelles des pixels ayant des composantes de vitesse existent continuellement le long d'une direction verticale, sur la base des informations de vitesse pour les pixels ;
la détermination si une ligne oblique formée par des pixels incluant une composante de vitesse est une frontière de route (A, B, C), sur la base des informations de vitesse calculées ;
dans lequel l'étape de détermination comprend :

la transformation des positions de points les plus basses en positions tridimensionnelles dans l'espace réel et le calcul d'une répartition positionnelle des positions les plus basses transformées ;
l'extraction d'une région avec une grande possibilité d'avoir la frontière de route à partir de l'image (3a), sur la base de la répartition positionnelle des positions les plus basses transformées ; et
la détermination si une ligne droite qui connecte les positions de points les plus basses est une frontière de route (A, B, C) sur la base de la région extraite.

**6.** Méthode selon la revendication 5, comprenant la transformation des positions de points les plus basses en positions tridimensionnelles en utilisant un paramètre d'imagerie d'un dispositif d'imagerie (101), en supposant que toutes les positions de points les plus basses sont situées sur une surface de route.

**7.** Méthode selon la revendication 5 ou la revendication 6, comprenant la détermination si un gradient de la ligne droite connectant les positions de points les plus basses dans la région extraite est dans une plage prédéterminée établie pour chaque région, et la détermination de ce fait si la ligne droite connectant les positions de points les plus basses dans chaque région est la frontière de route (A, B, C).

**8.** Méthode selon l'une quelconque des revendications 5 à 7, dans laquelle il est considéré que la frontière de route (A, B, C) inclut au moins l'un d'une ligne blanche, un parapet, une bordure, une ligne droite connectant des points de contact entre une paroi extérieure et une surface de route, une ligne droite connectant des points de contact entre un objet tridimensionnel et la surface de route, et une ligne droite connectant la surface de route et un champ.

**9.** Véhicule ayant un appareil (100) selon l'une quelconque des revendications 1 à 4 ou apte à utiliser une méthode selon l'une quelconque des revendications 5 à 8.

# FIG.1

# FIG.2

CAMERA'S
OPTICAL AXIS

Y  101

Z

CAMERA'S
OPTICAL AXIS

X

Z

101

# FIG.3

# FIG.4A

**BINARIZATION**

# FIG.4B

**THINNING**

1 PIXEL

$x_0$

# FIG.4C

**EXPANDING**

3 PIXELS

$x_0-1$  $x_0$  $x_0+1$

# FIG.4D

**TIME t**

VOTE VALUE
(COUNT)

6
5
4
3
2
1

$x_0$

# FIG.4E

**TIME t+1**

COUNT UP

H

h

$x_0$

(1) GRADIENT=1/SPEED
EDGE POSITION
=$x_0$+h/H

(2) SUBPIXEL=h/H

# FIG.4F

**TIME t+2**

SHIFT EDGE POSITION
COUNT UP

$x_0+1$

EP 1 796 042 B1

# FIG.5

FIG.6

# FIG.7

REGION 21 — -5.25m -3.5m -1.75m 0m 1.75m -3.5m 5.25m

REGION 11 — RB4 / RB5 / RB8 — 50m / 40m

REGION 12 — RB3 / RB9 — 30m

REGION 13 — RB1 / RB6 / RB10 — 20m

REGION 14 —

REGION 15 — RB7 — 10m / 0m

REGION 40
(REGIONS HAVING SAME X-AXIS)

FIG.8

# FIG.9

CALCULATE GRADIENT a3 OF
LINE CONNECTING POINTS
CORRESPONDING TO Bp1, Bp3, Bp4

-5.25m  -3.5m  -1.75m   0m     1.75m   -3.5m   5.25m

TRANSFORM THESE POINTS AND
CALCULATE GRADIENT T30aI OF
LINE CONNECTING THESE POINTS

TRANSFORM THESE POINTS
INTO X-Y COORDINATE SYSTEM AND
CALCULATE GRADIENT T30a2 OF
LINE CONNECTING THESE POINTS

# FIG.10

```
                    ( START )
                        │
                        ▼                        ╭─S1
        ┌───────────────────────────────────┐
        │        OBTAIN PICTURE IMAGE        │
        └───────────────────────────────────┘
                        │                        ╭─S2
                        ▼
        ┌───────────────────────────────────┐
        │     CALCULATE EDGE PICTURE IMAGE   │
        └───────────────────────────────────┘
                        │                        ╭─S3
                        ▼
        ┌───────────────────────────────────┐
        │    CALCULATE SPEED PICTURE IMAGE   │
        └───────────────────────────────────┘
                        │                        ╭─S4
                        ▼
        ┌───────────────────────────────────┐
        │   SET REGION FOR DETECTING LOWEST POINT │
        └───────────────────────────────────┘
                        │                        ╭─S5
                        ▼
        ┌───────────────────────────────────┐
        │    DETECT POSITION OF LOWEST POINT │
        └───────────────────────────────────┘
                        │                        ╭─S6
                        ▼
        ┌───────────────────────────────────┐
        │  CALCULATE 3-D POSITION OF LOWEST POINT │
        └───────────────────────────────────┘
                        │                        ╭─S7
                        ▼
        ┌───────────────────────────────────┐
        │   CALCULATE 3-D POSITION DISTRIBUTION │
        └───────────────────────────────────┘
                        │                        ╭─S8
                        ▼
             ◇ WERE ALL 3-D POSITIONS CALCULATED? ◇ ── NO
                        │ YES
                        ▼                        ╭─S9
        ┌───────────────────────────────────┐
        │  EXTRACT TRAVELING ROAD BOUNDARY REGION │
        └───────────────────────────────────┘
                        │                        ╭─S10
                        ▼
        ┌───────────────────────────────────┐
        │ CALCULATE STRAIGHT LINE OF LOWEST POINT POSITIONS │
        └───────────────────────────────────┘
                        │                        ╭─S11
                        ▼
        ┌───────────────────────────────────┐
        │  DETECT TRAVELING ROAD BOUNDARY LINE │
        └───────────────────────────────────┘
                        │                        ╭─S12
                        ▼
             ◇ WERE ALL STRAIGHT LINES DETECTED? ◇ ── NO
                        │ YES
                        ▼                        ╭─S13
             ◇        IGNITION OFF?            ◇ ── NO
                        │ YES
                        ▼
                    ( END )
```

**EP 1 796 042 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10214326 A
- EP 1227438 A
- US 146041 A
- JP 2004278250 A
- JP 2005351783 A